# EUROPÄISCHE PATENTANMELDUNG

(11) **EP 1 985 347 A1**
(43) Veröffentlichungstag der Anmeldung: **29.10.2008**
(21) Anmeldenummer: 07107136.9
(22) Anmeldetag: 27.04.2007
(51) Int. Cl.: B01D 3/10, B01D 5/00

(54) **Verdampfer**

(71) Anmelder: Büchi Labortechnik AG, CH-9230 Flawil (CH)
(72) Erfinder: Dr. Freydl, Ernst, 9011, St. Gallen (CH)
(74) Vertreter: Hepp, Dieter

(57) **Zusammenfassung**

Ein Verdampfer (1) umfasst ein Verdampfergefäss (15), einen Kühler (2) und ein Auffanggefäss (3). Der Kühler (2) und das Auffanggefäss (3) sind Teil eines vakuumierbaren Systems. Zwischen dem Kühler (2) und dem Auffanggefäss (3) ist ein Kühlerventil (6) angeordnet und das Auffanggefäss (3) weist einen Auslass (7) auf, welcher mit einem Auslassventil (8) versehen ist. Der Verdampfer (1) umfasst Mittel (12) zum mindestens teilweisen Ausgleichen eines Druckunterschieds zwischen Atmosphärendruck und einem Druck im Auffanggefäss (3). Das Auslassventil (8) und/oder das Kühlerventil (6) ist ein Rückschlagventil.

## Beschreibung

Die Erfindung betrifft einen Vakuum-Verdampfer zum Eindampfen von Lösungsmitteln sowie ein Verfahren zur Destillation mit den Merkmalen des Oberbegriffs der unabhängigen Ansprüche.

Derartige Verdampfer dienen insbesondere dazu, einstufige Destillationen schnell und schonend durchzuführen. Bevorzugt handelt es sich um Rotationsverdampfer, bei welchem eine Destillationsflüssigkeit in einem Verdampfergefäss, welches in einem Heizbad rotiert, verdampft wird.

Rotationsverdampfer für die Destillation sind bekannt. Die Anmelderin beispielsweise produziert und vertreibt unter dem Namen Rotavapor® Rotationsverdampfer. Bei diesen Geräten wird ein Lösungsmittel in einem rotierenden Verdampferkolben erwärmt. Die Rotation bewirkt eine gute Durchmischung der Probe und sorgt für eine höhere Verdampfungsrate. Der Lösungsmitteldampf strömt in einen Kühler, wo das Lösungsmittel kondensiert. Durch die Schwerkraft fliesst das auskondensierte Lösungsmittel in einen Auffangkolben. Der Verdampferkolben, der Kühler und der Auffangkolben können vakuumiert werden, was die Siedetemperatur senkt und eine Leistungssteigerung der Destillation bewirkt. Insbesondere für den Laborbereich bestimmte Geräte haben den Nachteil, dass nur beschränkte Probenmengen verarbeitet werden können. Die Kapazitäten des Verdampferkolbens und des Auffangkolbens sind beschränkt. Nach jedem Destillationszyklus muss der Auffangkolben manuell geleert werden und der Verdampferkolben von Hand wieder gefüllt werden. Dies ist kompliziert und aufwendig. Eine kontinuierliche Destillation ist deshalb nicht möglich. Zur Entnahme aus dem Auffangkolben muss dieser belüftet werden.

Die DE 102 26 478 B4 beschreibt einen Rotationsverdampfer, bei welchem über eine Zuführeinrichtung automatisch und mit variablem Durchfluss die Destillationsflüssigkeit in den Verdampferkolben zuführbar ist. Um das Destillat aus dem Auffangkolbens zu entnehmen, muss die Destillation unterbrochen werden, und der Auffangkolben muss vom Rotationsverdampfer getrennt werden. Auch dieser Rotationsverdampfer ist für eine kontinuierliche Destillation wenig geeignet, weil das Destillat zwischen zwei Destillationszyklen nur manuell entleert werden kann. Es wäre denkbar und ist bei Grossrotationsverdampfer bekannt, die Entnahme durch steuerbare Ventile zu automatisieren. Weil diese Ventile chemisch resistent sein müssen, (wegen der Lösungsmittel) ist diese Lösung teuer und für kleinere Verdampfer nicht praktikabel.

Es ist deshalb eine Aufgabe der vorliegenden Erfindung, die Nachteile des Bekannten zu vermeiden, insbesondere eine Vorrichtung und ein Verfahren der eingangs genannten Art zu schaffen, welche insbesondere für die kontinuierliche Destillation verwendbar ist. Der Verdampfer soll auf einfache Art und Weise herstellbar sein und wartungsarm betreibbar sein.

Erfindungsgemäss werden diese Aufgabe mit einem Verdampfer und einem Verfahren mit den Merkmalen des kennzeichnenden Teils der unabhängigen Ansprüche gelöst.

Der Verdampfer, insbesondere der Rotationsverdampfer, umfasst ein Verdampfergefäss, einen Kühler und ein Auffanggefäss. Der Kühler und das Auffanggefäss sind Teil eines vakuumierbaren Systems. Unter vakuumierbar bzw. Vakuum ist in der vorliegenden Anmeldung ein Unterdruck gegenüber Atmosphärendruck zu verstehen. Bevorzugt sind der Kühler und das Auffanggefäss zum Erzeugen des Unterdrucks im System direkt oder indirekt an eine Vakuum-Pumpe angeschlossen oder anschliessbar. Zwischen dem Kühler und dem Auffanggefäss ist ein Kühlerventil angeordnet oder anordenbar. Das Auffanggefäss weist einen Auslass auf, welcher mit einem Auslassventil versehen oder versehbar ist. Das Auslassventil und/oder das Kühlerventil sind erfindungsgemäss ein Rückschlagventil.

Der Verdampfer umfasst zudem Mittel zum mindestens teilweisen Ausgleich eines Druckunterschieds zwischen Atmosphärendruck und einem Druck, insbesondere einem Unterdruck, im Auffanggefäss. Es genügt, dass diese Mittel den Druck im Auffanggefäss derart dem Atmosphärendruck angleichen können, dass die Druckänderung eine Änderung einer Ventilstellung eines Ventils, bevorzugt eines Rückschlagventils, auslösen kann. Auch ist ein Vakuum im Sinne der Anmeldung gegeben, wenn die Differenz zwischen Unterdruck und Atmosphärendruck reicht, ein Rückschlagventil zu betätigen. Eine solche Verdampferanordnung hat den Vorteil, dass das Kühlerventil und/oder das Auslassventil besonders einfach über Druckänderungen im vakuumierbaren System steuerbar sind. Durch Betätigen der Mittel zum Druckausgleichen gelangen die Rückschlagventile automatisch in die richtige Position zur Entnahme des Destillats, nähmlich eine geöffnete Position des Auslassventils und eine geschlossene Position des Kühlerventils. Besonders vorteilhaft sind das Kühler- und das Auslassventil Rückschlagventile, welche bei gleichem Druck zwischen Ventileinlass und Ventilauslass in einer Offenstellung verharren und beim Anlegen einer Druckdifferenz in eine Schliessstellung wechseln. Kühler- und Auslassventil sollten chemikalienresistent sein. Die Verwendung von rein mechanisch funktionierenden, einfach und günstig herstellbaren Rückschlagventilen erlaubt einen automatisierten Betrieb ohne teure ansteuerbare Ventile. Rückschlagventile sind wegen ihrer einfachen Bauweise wenig störungsanfällig und deshalb wartungsarm. Während bevorzugt sowohl das Kühler - als auch das Auslassventil als Rückschlagventile ausgebildet sind, ist es auch denkbar, nur eines der Ventile als Rückschlagventil auszubilden und das andere Ventil aktiv steuerbar zu gestalten. Auch so ergibt sich eine Reduktion der Kosten.

Bei den Mitteln für den Druckausgleich im Auffangkolben handelt es sich bevorzugt um ein Belüftungsventil, welches als Magnetventil ausgestaltet ist. Im Zusammenspiel mit einer Vakuum-Pumpe kann dadurch der Druck im System variiert bzw. kontrolliert werden und dadurch indirekt die Ventilstellung des Kühler- bzw. des Auslassventils gesteuert werden. Weil das Belüftungsventil nur mit Luft, nicht aber mit Lösungsmittel in Kontakt gelangt, kann ein einfaches steuerbares Ventil verwendet werden, welches nicht inert gegenüber Chemikalien sein muss.

Das Belüftungsventil kann direkt am Auffangkolben angebracht sein. Das Belüftungsventil kann aber auch in einer Leitung, welche den Auffangkolben und eine Vakuumpumpe verbindet, angebracht sein.

Bevorzugt ist zwischen dem Auffanggefäss und einer Vakuum-Pumpe zum Vakuumieren des Systems ein Absperrventil angeordnet oder anordenbar. Dieses kann beispielsweise ebenfalls als Magnetventil ausgebildet sein. Das Schliessen des Absperrventils verhindert weitgehend, dass während der Belüftung das Auffanggefäss gleichzeitig belüftet und vakuumiert wird. Ein weiterer Vorteil des Absperrventils besteht darin, dass in Zusammenarbeit mit dem Kühlerventil und einem Vakuumierventil ein Druckanstieg im Kühler und Verdampfergefäss während der Belüftung des Auffangkolbens verhindert werden kann. Dazu ist das Vakuumsystem bevorzugt als Ringleitung aufgebaut.

Ein Vakuumventil ist bevorzugt zwischen dem Kühler und der Vakuum-Pumpe angeordnet. Dadurch kann verhindert werden, dass im Kühler ein Druckausgleich statt findet, wenn beispielsweise die Vakuum-Pumpe abgeschaltet wird oder vom System getrennt wird. Besonders gut eignet sich dafür ebenfalls ein Rückschlagventil, welches so aufgebaut ist, dass es bei einem Druckabfall auf der Seite der Vakuum-Pumpe automatisch schliesst. Der Vorteil einer solchen Anordnung besteht darin, dass Rückschlagventile keine aktive Steuerung benötigen.

In einer bevorzugten Ausführungsform sind das Verdampfergefäss und/oder das Auffanggefäss mit einem Niveausensor für Flüssigkeit versehen. Dies hat den Vorteil, dass damit der Betrieb des Verdampfers überwacht werden kann und bevorzugt das Ende eines Destillationszyklus detektiert werden kann. Das Niveau ist beispielsweise optisch bestimmbar. Auch eine indirekte Niveaubestimmung, beispielsweise über eine Gewichtsmessung des Auffanggefässes und/oder des Verdampfergefässes, ist möglich. Der Niveausensor kann so ausgebildet sein, dass das Niveau stetig detektiert wird oder dass das nur das Erreichen bestimmter Grenzwerte wie z.B. voll/leer gemessen wird. Bei Erreichen eines bestimmten Niveaus kann auf besonders einfache Art und Weise der Auffangkolben durch Betätigen des Belüftungsventils entleert werden.

In einer weiteren bevorzugten Form mündet eine Zuleitung für die Zufuhr einer Destillationsflüssigkeit in das Verdampfergefäss. Dadurch kann nach einem Destillationszyklus das Verdampfergefäss neu befüllt werden, ohne dieses vom Verdampfer trennen und insbesondere ohne das Vakuum im System abbauen zu müssen. Die Zuleitung ist bevorzugt mit einem Reservoir für die Destillationsflüssigkeit verbunden. Dies ermöglicht beispielsweise die automatische Wiederbefüllung bzw. eine kontinuierliche Destillation.

Bevorzugt wird die Befüllung des Verdampfergefässes über ein in der Zuleitung vorgesehenes Einlassventil kontrolliert. Dazu eignet sich insbesondere ein Magnetventil. Durch diese Anordnung lässt sich die Befüllung einfach automatisieren.

Bevorzugt ist mindestens eines der steuerbaren Ventile, insbesondere ein Magnetventil wie das Absperr-, Einlass- oder Belüftungsventil mit einem Kontroller verbunden oder verbindbar. Dieser kontrolliert eine Ventilstellung eines Ventils bevorzugt in Abhängigkeit eines bestimmten Wertes. Dieser Wert kann ein Zeitintervall oder ein Flüssigkeitsniveau sein. Es sind aber auch andere Werte des Verdampfers denkbar wie beispielsweise Temperatur oder Druck an einem oder mehreren Komponenten des Verdampfers. Selbstverständlich kann die Ventilsteuerung auch in Abhängigkeit von mehreren Werten gesteuert werden. Die Werte können entweder aus Sensoren am Verdampfer stammen oder es handelt sich um vordefinierte, in einem Speicher des Kontrollers gespeicherte oder speicherbare Werte. Durch die Verwendung eines Kontrollers lässt sich die Destillation in vorteilhafter Weise automatisieren. Dadurch wird die Möglichkeit geschaffen, den Verdampfer automatisiert und kontinuierlich zu betreiben, ohne dass jeder Destillationszyklus manuell vorbereitet werden muss. Dies erlaubt die Kapazität des Verdampfers zu erhöhen.

Der Kontroller umfasst deshalb bevorzugt eine Schnittstelle für die Eingabe von diesen Werten bzw. Prozessparametern. Beispielsweise sind das die Werte der Niveausensoren, der Ventilstellungen, der Volumina des Verdampfergefässes und des Auffanggefässes, der verwendeten oder verwendbaren Destillationsflüssigkeiten, Zeitparameter, Temperaturwerte oder Druckwerte. Die Schnittstelle kann beispielsweise ein Tastaturblock für die manuelle Eingabe von Parametern sein. Bevorzugt werden die Werte von den Sensoren des Verdampfers jedoch direkt oder indirekt über die Schnittstelle in den Kontroller eingelesen und weiterverarbeitet und/oder gespeichert.

Ein weiterer Aspekt der Erfindung betrifft die Verwendung des oben beschriebenen Verdampfers zur Destillation. Bevorzugt wird er zur kontinuierlichen Destillation verwendet. Die kontinuierliche Destillation hat den Vorteil, dass der Durchsatz des Verdampfers erhöht wird.

Ein zusätzlicher Aspekt umfasst ein Verfahren zur Destillation. Dazu werden mit einem Verdampfer, wie beispielsweise vorhergehend beschrieben, folgende Schritte ausgeführt:
a) Füllen eines Verdampfergefässes mit Destillationsflüssigkeit, insbesondere durch Öffnen eines Einlassventils in einer Zuleitung für Destillationsflüssigkeit.
b) Vakuumieren eines Kühlers und eines Auffanggefässes und Sammeln eines kondensierten Destillats im Auffanggefäss. Der Schritt b) wird bevorzugt vor Schritt a) werden. Dadurch kann durch den Unterdruck die Destillationsflüssigkeit angesaugt werden.
c) Bestimmung des Endes eines ersten Destillationszyklus, insbesondere durch Bestimmung eines Flüssigkeitsniveaus im Auffanggefäss und/oder im Verdampfergefäss oder nach Ablauf eines vorgebbaren Zeitintervalls.
d) Beaufschlagen des Auffanggefässes mit Druck, insbesondere Atmosphärendruck, so dass sich wenigstens ein als Rückschlagventil angeordnetes Auslassventil des Auffanggefässes automatisch öffnet und/oder ein zwischen dem Kühler und dem Auffanggefäss angeordnetes als Rückschlagventil ausgebildetes Kühlerventil automatisch schliesst.
e) vorzugsweise beliebiges Wiederholen der Schritte a) bis d) für beliebig viele Destillationszyklen.

Der Vorteil dieses Verfahrens liegt darin, dass sich die Ventilstellung(en) des Auslassventils und/oder des Kühlerventils über den Druck im Kühler und im Auffanggefäss, welche zusammen bevorzugt ein vakuumierbares System bilden, steuern lassen. Dies erlaubt es, insbesondere die Destillation automatisiert zu betreiben.

Bevorzugt wird vor dem Schritt d) die Vakuumierung des Auffanggefässes unterbrochen. Beispielsweise wird dazu ein zwischen dem Auffanggefäss und einer Vakuum-Pumpe angeordnetes Absperrventil geschlossen oder die Vakuum-Pumpe abgestellt. Das Schliessen des Absperrventils ist vorteilhaft, weil dadurch die anderen Komponenten des vakuumierbaren Systems wie der Kühler oder das Verdampfergefäss weiter vakuumiert werden können, bzw. vakuumiert bleiben, auch wenn das Auffanggefäss belüftet wird. Eine einmal eingestellte Betriebsbedingung muss daher nicht mehr neu eingestellt werden. Druck und Temperatur bleiben gleich.

Vorzugsweise erfolgt der Schritt d) eines Destillationszyklus im Wesentlichen gleichzeitig mit dem Schritt a) eines nachfolgenden Destillationszyklus. Dies hat den Vorteil, dass die Destillationszeit insgesamt verkürzt werden kann, indem sich einzelne Destillationszyklen teilweise überlagern. Dies bewirkt eine Leistungssteigerung des Verdampfers.

Besonders vorteilhaft wird mindestens einer der Schritte a) bis e) mittels eines Kontrollers kontrolliert. Dadurch kann das Verfahren mindestens teilweise automatisiert werden.

Bevorzugt erfolgt die Kontrolle in Abhängigkeit mindestens eines Prozessparameters. Mögliche Prozessparameter sind beispielsweise: Flüssigkeitsniveau im Destillationsgefäss und/oder Auffanggefäss, Zeitdauer seit dem Start eines Destillationszyklus, Ventilstellungen, Volumina des Verdampfergefässes und/oder des Auffanggefässes, chemische oder physikalische Eigenschaften der Destillationsflüssigkeit, Temperaturwerte und/oder Druckwerte. Durch die Verwendung von Prozessparamtern kann die insbesondere kontinuierliche Destillation weitgehend automatisiert werden.

Mindestens ein Prozessparameter kann vorzugsweise mittels geeigneter Sensoren am Verdampfer abgegriffen werden. Der Wert wird dann an den Kontroller übermittelt, beispielsweise über eine elektronische Verbindung, denkbar sind aber auch drahtlose Übermittlungsverfahren.

Bevorzugt kann ein herkömmlicher Labor-Rotationsverdampfer zu einem erfindungsgemässen Verdampfer für die kontinuierliche Destillation umgerüstet werden. Dazu werden lediglich folgende Komponenten benötigt: einen Sensor zur Ermittlung eine Flüssigkeitsniveaus, zwei Magnetventile zur kontrollierten Belüftung (Belüftungsventil) und zum Öffnen und Schliessen des Vakuum-Systems (Absperrventil), ein Kontroller wie z.B. eine SPS-Steuerung mit Anschlussmöglichkeit für die beiden Magnetventile und den Niveausensor, ein Auffanggefäss mit drei Anschlussstutzen sowie zwei chemikalienresistente und betreffend Durchsatz der Leistung des Verdampfers angepasste Rückschlagventile als Kühlerventil und Auslassventil und ein normales Rückschlagventil als Vakuumierventil.

Weitere Einzelmerkmale und Vorteile der Erfindung ergeben sich aus der nachfolgenden Beschreibung der Ausführungsbeispiele und aus den Zeichnungen. Es zeigen:
- Figur 1:: Schematische Teildarstellung eines ersten Beispiels eines erfindungsgemässen Verdampfers,
- Figur 2:: Schematische Teildarstellung eines zweiten Beispiels eines erfindungsgemässen Verdampfers,
- Figur 3:: Erweiterte schematische Darstellung des zweiten Beispiels eines Verdampfers nach Figur 2,
- Figur 4:: Teilansicht eines erfindungsgemässen Verdampfers mit Auffanggefäss und Kühler,
- Figur 5:: Querschnitt durch das Auffanggefäss gemäss Figur 4,
- Figur 6:: Vergrösserung des Querschnitts des in Figur 5 dargestellten Auslassventils,
- Figur 7:: Vergrösserung des Querschnitts des in Figur 5 dargestellten Kühlerventils.

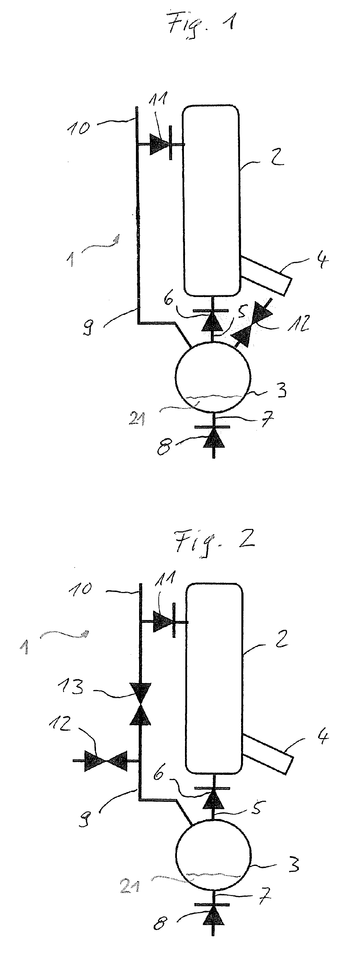

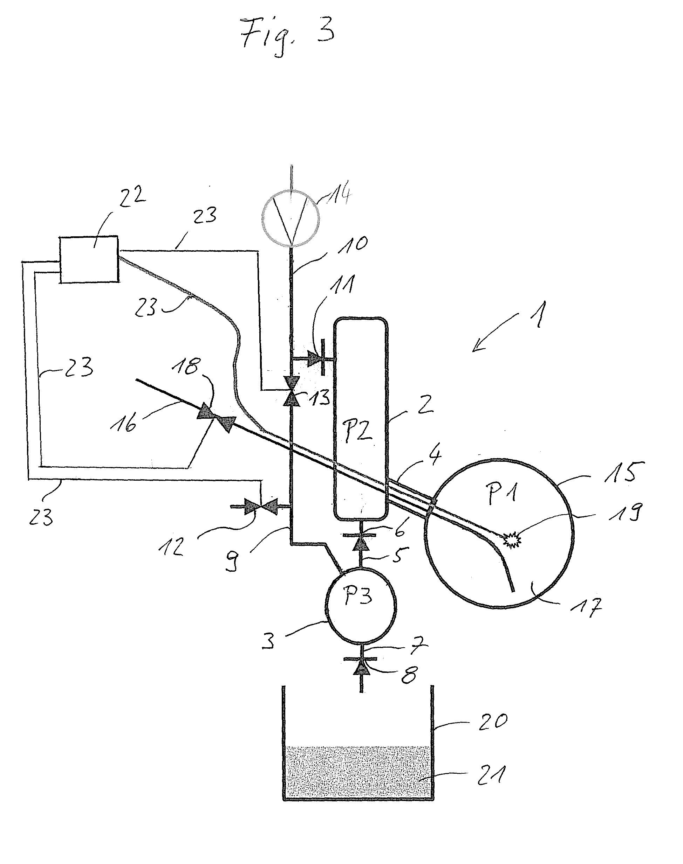

Die Figur 1 zeigt schematisch einen Verdampfer 1 mit einem Kühler 2 und einem Auffanggefäss 3. Der Kühler 2 weist ein Dampfdurchführungsrohr 4 auf, durch welches dem Kühler 2 ein verdampftes Lösungsmittel von einem hier nicht dargestellten Verdampfergefäss 15 (siehe Figur 3) zugeführt werden kann. Der Kühler 2 ist über eine Destillat-Leitung 5 mit dem Auffanggefäss 3 verbunden. In der Destillat-Leitung 5 ist ein Kühlerventil 6, ausgebildet als Rückschlagventil, angeordnet. Das Auffanggefäss 3 weist an der untersten Stelle einen Auslass 7 mit einem Auslassventil 8 auf. Das Auslassventil 8 dient zur Steuerung der Entnahme eines Destillates 21 aus dem Auffanggefäss 3. Auch das Auslassventil 8 ist hier als Rückschlagventil ausgebildet. Am Auffanggefäss 3 ist zudem ein Belüftungsventil 12 in Form eines Magnetventils angeordnet.

Das Auffanggefäss 3 ist an eine Unterdruckleitung 9 angeschlossen welche über einen Anschluss 10 an eine hier nicht dargestellte Vakuum-Pumpe anschliessbar ist. Die Unterdruckleitung 9 bildet zusammen mit dem Auffanggefäss 3 und dem Kühler 2 eine vakuumierbare Ringleitung. Zwischen dem Kühler 2 und dem Anschluss 10 ist ein Vakuumventil 11 angebracht, welches als Rückschlagventil ausgebildet ist.

Die Figur 2 zeigt schematisch einen Ausschnitt eines weiteren Beispiels für einen erfindungsgemässen Verdampfer 1. Anstelle der Anordnung des Belüftungsventils 12 direkt am Auffanggefäss 3 ist hier das Belüftungsventil 12 an der Unterdruckleitung 9 angebracht. Dadurch ist das Auffanggefäss 3 über die Unterdruckleitung 9 belüftbar, wenn das Belüftungsventil 12 geöffnet wird. Oberhalb des Belüftungsventils 12 ist in diesem Beispiel in der Unterdruckleitung 9 ein zusätzliches Absperrventil 13 angeordnet. Wird das Asperrventil 13 geschlossen, wird die Unterdruckversorgung des Auffanggefässes 3 unterbrochen.

Die Figur 3 zeigt den Verdampfer 1 der Figur 2, ausgestattet mit einer Vakuum-Pumpe 14, welche über den Anschluss 10 mit der Unterdruckleitung 9 verbunden ist.

Am Dampfdurchführungsrohr 4 ist ein rotierbar gelagerter Verdampferkolben als Verdampfergefäss 15 befestigt, der in an sich bekannter Weise in einem Wasserbad eingetaucht ist. In das Verdampfergefäss 15 mündet eine Zuleitung 16 für eine Destillationsflüssigkeit 17. Der Zufluss durch die Zuleitung 16 ist über ein Einlassventil 18 steuerbar.

Im Verdampfergefäss 15 ist zudem ein Niveausensor 19 angebracht, welcher das Niveau der Destillationsflüssigkeit 17 detektieren kann. Der Niveausensor ist typischerweise ein optischer Sensor, z.B. ein optischer Leiter. Es ist denkbar, auch das Auffanggefäss 3 mit einem solchen Niveausensor 19 auszustatten, welcher das Flüssigkeitsniveau bestimmen kann.

Die Magnetventile (12,13) und der Niveausensor 19 sind mit einer PSP-Steuerung als Kontroller 22 verbunden.

Unter dem Auffanggefäss 3 bzw. unter dessen Auslass 7 ist ein Auffangbehälter 20 angeordnet, welcher zur Aufnahme von Destillat 21 aus dem Auffanggefäss 3 dient.

Das erfindungsgemässe Verfahren wird nun anhand der Figur 3 beispielhaft erläutert. Der Verdampfer 1 ist als herkömmlicher Rotationsverdampfer ausgebildet, wobei nur die für die vorliegende Erfindung wesentlichen Teile gezeigt sind. Zusätzlich sind zusätzliche Bauteile wie Heizbad, Drehantrieb für einen Rotationskolben und höhenverstellbares Stativ in dem Fachmann bekannter Weise angeordnet. Zu Beginn eines Destillationszyklus herrscht in allen Gefässen 2,3,15 und in den Leitungen 4,5,9 Atmosphärendruck, d.h. P1 = P2 = P3 = Atmosphärendruck. Das Verdampfergefäss 15 und das Auffanggefäss 3 sind leer. Nun wird die Vakuum-Pumpe 14 in Betrieb gesetzt, wobei sichergestellt werden muss, dass das Belüftungsventil 12 geschlossen ist und das Absperrventil 13 offen ist. Damit beginnt die Vakuumierung des Systems umfassend die Unterdruckleitung 9, das Auffanggefäss 3, den Kühler 2 und das Verdampfergefässes 15. Über die Zuleitung 16 wird das Verdampfergefäss 15 mit 0,5 bis 1,5 l Destillationsflüssigkeit 17 durch Hineinsaugen gefüllt. Die Destillationsflüssigkeit 17 kann auch vor dem Vakuumieren eingefüllt werden. In diesem Fall ist das Befüllen jedoch aufwändiger, weil die Ansaugwirkung durch den Unterdruck fehlt. Sobald die gewünschte Menge im Verdampfergefäss 15 enthalten ist, wird das Einlassventil 18 geschlossen. Das gewünschte Füllniveau wird automatisch über den Niveausensor 19 bestimmt oder von Auge festgelegt. In diesem System besteht ein Unterdruck gegenüber dem Atmosphärendruck. Dadurch liegt am Auslassventil 8 ein Druckunterschied vor (P3 < Atmosphärendruck) weshalb das Auslassventil 8 (Rückschlagventil) geschlossen wird. Das Vakuumierventil 11 und das Kühlerventil 6 bleiben in der Offenstellung, weil der Druck im System überall gleich bleibt (P1 = P2 = P3). Auf Grund der Schwerkraft kann das Destillat durch das Rückschlagsventil 6 treten. Das Verdampfergefäss 15 ist ein Rotationskolben, welcher sich in einem hier nicht dargestellten Heizbad dreht. Durch die Erwärmung verdampft ein Lösungsmittel im Verdampfergefäss 15. Der Dampf wird durch das Dampfdurchführungsrohr 4 zum Kühler 2 geführt. Dort kondensiert der Dampf und das Destillat 21 sammelt sich im Auffanggefäss 3. Das Auffanggefäss 3 hat ein Volumen von rund 0.2 bis 1.0 Liter. Wenn das Volumen des Auffanggefässes gleich dem Volumen des Verdampfergefässes 15 bzw. der Menge der zugegebenen Destillationsflüssigkeit 17 ist, genügt ein Sensor 19 im Auffanggefäss 3 oder im Verdampfergefäss 15, um das Ende eines Destillationszyklus zu bestimmen. Das Detektieren eines vollen Auffanggefässes 3 bedeutet dann ein leeres Verdampfergefäss 15 und umgekehrt. Sobald das Ende eines Destillationszyklus erreicht wird, beispielsweise, wenn das Auffanggefäss 3 mit einer bestimmten Menge Destillat 21 gefüllt ist resp. im Verdampfergefäss 15 ein unteres Niveau unterschritten wurde, wird das Absperrventil 13 geschlossen, wodurch die Unterdruckleitung 9 zwischen der Vakuum-Pumpe 14 und dem Auffanggefäss 3 unterbrochen wird. Nun wird das Belüftungsventil 12 geöffnet, wodurch sich der Druck P3 dem Atmosphärendruck anzugleichen beginnt. Das Auslassventil 8 öffnet sich automatisch, sobald die Druckdifferenz zwischen P3 und Atmosphärendruck einen bestimmten Wert unterschreitet, und das Auffanggefäss 3 entleert sich in den Auffangbehälter 20. Durch den Druckausgleich im Auffanggefäss 3 schliesst sich gleichzeitig automatisch das Kühlerventil 6. Der Unterdruck im Kühler 2 und im Verdampfergefäss 15 bleibt deshalb erhalten.

Das Vakuumierventil 11 verhindert einen kurzzeitigen Druckanstieg im Verdampfer während der Evakuuierung der Unterdruckleitung 9 und dem Auffanggefäss 3.

Auf den Einsatz des Absperrventils 13 kann auch verzichtet werden, vorausgesetzt, der Durchsatz des Belüftungsventils 12 ist grösser als der Unterdruck Durchsatz in der Unterdruckleitung 9. Jedoch ist dann ein Druckanstieg im System wahrscheinlich.

Sobald das Auffanggefäss 3 leer ist, ist ein Destillationszyklus abgeschlossen. Nun wird das Belüftungsventil 12 geschlossen und das Absperrventil 13 wieder geöffnet und ein neuer Destillationszyklus kann beginnen, indem das Verdampfergefäss 15 neu befüllt wird. Durch Erzeugen des Unterdruckes im Auffanggefäss 3 schliesst sich das Auslassventil 8 und öffnet sich das Kühlerventil 6 automatisch wieder. Das Befüllen kann jedoch auch gleichzeitig mit der Entleerung des Auffanggefässes 3 erfolgen.

Die Steuerung des Prozessablaufs erfolgt über den Kontroller 22, welcher hier eine SPS-Steuerung ist, welche über die Datenleitungen 23 mit dem Niveausensor 19 und dem Belüftungsventil 12 und an das Absperrventil 13 verbunden ist.

Als Werkstoffe werden vornehmlich chemisch resistente Werkstoffe wie Glas, PTFE, Perfluorelastomere wie z.B. Kalrez®, PEEK etc. verwendet. Für die Niveausensoren 19 sind Messungen auf Grund von Änderungen der Reflexion, Brechung, Kapazität, Gewicht oder Ultraschall- oder optische Messungen (Kamera/Bildverarbeitung) denkbar.

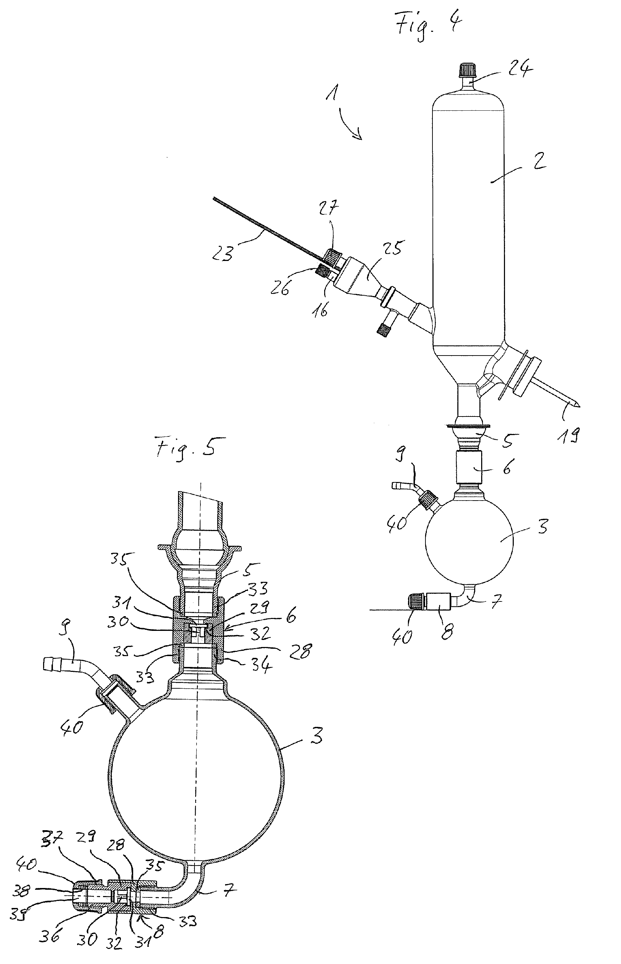

Die Figur 4 zeigt einen herkömmlichen Kühler 2, welcher über das Kühlerventil 6 mit dem Auffanggefäss 3 verbunden ist. Am Auslass 7 ist das Auslassventil 8 befestigt. Mittels einer Überwurfmutter 40 kann ein Schlauch (nicht dargestellt) am Auslassventil 8 befestigt werden zum Leeren des Auffanggefässes 3. Über einen Kühleranschluss 24 oder die Vakuumleitung 9 (mit einer Überwurfmutter 40 an einem Anschluss des Auffanggefässes befestigt) ist das System vakuumierbar. Der Kühler 3 ist mit einem konischen Aufsatz 25 versehen, welcher mit einem GL10-Anschluss 26 für die Nachspeisung der Destillationsflüssigkeit und einem GL14-Anschluss 27 für den optischen Niveausensor 19 versehen ist. Der Sensor 19 ist über die Datenleitung 23 an den Kontroller (nicht dargestellt) anschliessbar.

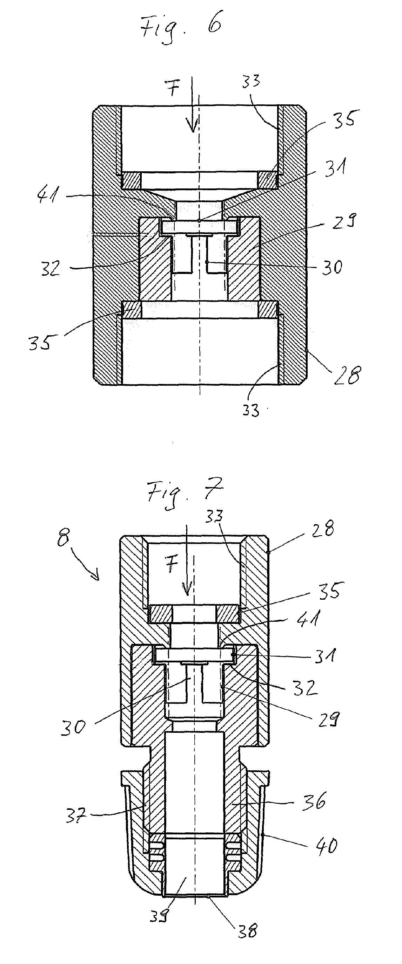

Im Schnitt Figur 5 durch das Auffanggefäss 3, welches hier ein Glaskolben ist, erkennt man das jeweils als Rückschlagventil ausgebildete Auslassventil 8 und das Kühlerventil 6. Der Aufbau der Ventile 8,6 ist in den Figuren 7 und 8 detaillierter dargestellt. Die Ventile 8,6 haben jeweils einen Ventilkörper 28 aus PEEK, in welchen jeweils ein Ventileinsatz 29 aus PEEK eingepresst worden ist, so dass der Ventilkörper 28 und der Ventileinsatz 29 fest miteinander verbunden sind. Am Ventileinsatz 29 ist mittig ein Stempel 30 vorgesehen, auf welchem eine Dichtscheibe 31 mit ihrer Unterseite aufliegt. Eine der Flussrichtung F entgegen gesetzte Oberseite der Dichtscheibe 31 liegt gegen eine ringförmig umlaufende Nase 41 des Ventilkörpers 28 an.

Die Dichtscheibe 31 ist aus einem Perfluorelastomer (Kalrez®). Falls Wasser als Destillat eingesetzt wird, kann auch eine Dichtscheibe 31 aus Gummi verwendet werden.

Ist das Auffanggefäss 3 belüftet, dann herrscht auf beiden Seiten der Dichtscheibe 31 der gleiche Druck. Das Destillat kann dann in Flussrichtung F um die Dichtscheibe 31 fliessen, weil diese durch das Destillat von der Nase 41 weg gegen die Schulter 32 gedrückt wird. Die Schulter 32 ist nicht umlaufend ausgebildet, sondern weist nicht dargestellte Aussparungen auf. Dadurch kann das Destillat die Dichtschiebe 31 umströmen.

Ist das Auffanggefäss 3 vakuumiert, wird die Dichtscheibe 31 gegen die Nase 41 gedrückt und die Ventile 8,6 befinden sich in einer Schliessposition. Das Destillat kann deshalb die Dichtscheibe 31 nicht passieren.

Der Ventilkörper 28 des Auslassventils 8 hat zwei Innengewinde 33 für eine Schraubverbindung mit der Destillat-Leitung 5 bzw. mit einem Kolbenhals 34. Eine Sovirel-Dichtung 35 aus einem Teflon ummantelten Silikonring dichtet den Ventilköper 28 gegen aussen ab. Ist das Destillat Wasser, genügt auch hier eine normale Gummidichtung.

Das Auslassventil 8 weist nur ein Innengewinde 33 auf. Der Ventileinsatz 29 hat einen mit einem Aussengewinde 37 versehenen Ventilstutzen 36. An diesen ist die Überwurfmutter 40 enthaltend eine FEP-Rohrdichtung 38 angeschraubt. Mit Hilfte der Überwurfmutter 40 und der Rohrdichtung 38 kann ein Schlauch oder ein Rohr dicht am Ventilstutzen 36 angeschlossen werden.

## Patentansprüche

1. Verdampfer (1), insbesondere Rotationsverdampfer, umfassend ein Verdampfergefäss (15), einen Kühler (2) und ein Auffanggefäss (3), wobei der Kühler (2) und das Auffanggefäss (3) Teil eines vakuumierbaren Systems sind und insbesondere direkt oder indirekt an eine Vakuum-Pumpe (14) angeschlossen oder anschliessbar sind, wobei zwischen dem Kühler (2) und dem Auffanggefäss (3) ein Kühlerventil (6) angeordnet oder anordenbar ist, wobei das Auffanggefäss (3) einen Auslass (7) aufweist, welcher mit einem Auslassventil (8) versehen ist, **dadurch gekennzeichnet, dass** der Verdampfer (1) Mittel (12) zum mindestens teilweisen Ausgleichen eines Druckunterschieds zwischen Atmosphärendruck und einem Druck im Auffanggefäss (3) umfasst und dass das Auslassventil (8) und/oder das Kühlerventil (6) ein Rückschlagventil ist.

2. Verdampfer (1) nach Anspruch 1, **dadurch gekennzeichnet, dass** zwischen dem Auffanggefäss (3) und einer Vakuum-Pumpe (14) ein insbesondere als Magnetventil ausgebildetes Absperrventil (13) angeordnet oder anordenbar ist.

3. Verdampfer (1) nach Anspruch 1 oder 2, **dadurch gekennzeichnet, dass** zwischen dem Kühler (2) und einer Vakuum-Pumpe (14) ein Vakuumventil (11), welches insbesondere als Rückschlagventil aufgebaut ist, angeordnet oder anordenbar ist.

4. Verdampfer (1) nach einem der vorhergehenden Ansprüche, **dadurch gekennzeichnet, dass** das Verdampfergefäss (15) und/oder das Auffanggefäss (3) mit einem Niveausensor (19) versehen ist.

5. Verdampfer (1) nach einem der vorhergehenden Ansprüche, **dadurch gekennzeichnet, dass** in das Verdampfergefäss (15) eine Zuleitung (16) für die Zufuhr einer Destillationsflüssigkeit (17) mündet.

6. Verdampfer (1) nach Anspruch 5, **dadurch gekennzeichnet, dass** an der Zuleitung (16) ein Einlassventil (18), insbesondere ein Magnetventil, zum Steuern des Zuflusses der Destillationsflüssigkeit (17) vorgesehen ist.

7. Verdampfer (1) nach einem der vorhergehenden Ansprüche, **dadurch gekennzeichnet, dass** mindestens ein Ventil (12,13,18) mit einem Kontroller (22) verbunden oder verbindbar ist, welcher eine Ventilstellung des Ventils (12,13,18) kontrolliert in Abhängigkeit eines bestimmten Wertes, insbesondere eines Zeitintervalls und/oder eines Flüssigkeitsniveaus.

8. Verdampfer (1) nach Anspruch 7, **dadurch gekennzeichnet, dass** der Kontroller (22) eine Schnittstelle umfasst für die Eingabe von Prozessparametern, insbesondere Werte eines Niveausensors (19), der Ventilstellungen, der Volumina des Verdampfergefässes (15) und des Auffanggefässes (3), der verwendeten oder verwendbaren Destillationsflüssigkeiten (17), Zeitparameter, Temperaturwerte oder Druckwerte.

9. Verwendung eines Verdampfers (1) nach einem der vorhergehenden Ansprüche zur Destillation, insbesondere zur kontinuierlichen Destillation.

10. Verfahren zur insbesondere kontinuierlichen Destillation mit einem Verdampfer (1), insbesondere nach einem der Ansprüche 1 bis 8, umfassend die Schritte:
a) Füllen eines Verdampfergefässes (15) mit Destillationsflüssigkeit (17), insbesondere durch Öffnen eines Einlassventils (18)) in einer Zuleitung (16) für Destillationsflüssigkeit (17)
b) Vakuumieren eines Kühlers (2) und eines Auffanggefässes (3), Verdampfen der Destillationsflüssigkeit, kondensieren der verdampfenden Flüssigkeit an einem Kühler (2) und sammeln der kondensierten Flüssigkeit im Auffanggefäss (3)
c) Bestimmung des Endes eines ersten Destillationszyklus, insbesondere durch Bestimmung eines Flüssigkeitsniveaus im Auffanggefäss (3) und/oder im Verdampfergefäss (15) oder nach Ablauf eines vorgebbaren Zeitintervalls.
d) Beaufschlagen des Auffanggefässes (3) mit Druck, insbesondere Atmosphärendruck, so dass sich wenigstens ein als Rückschlagventil ausgebildetes Auslassventil (8) des Auffanggefässes (3) automatisch öffnet und/oder ein zwischen dem Kühler (2) und dem Auffanggefäss (3) angeordnetes als Rückschlagventil ausgebildetes Kühlerventil (6) automatisch schliesst
e) vorzugsweise beliebiges Wiederholen der Schritte a) bis d) für weitere Destillationszyklen.

11. Verfahren nach Anspruch 10, **dadurch gekennzeichnet, dass** vor dem Schritt d) die Vakuumierung des Auffanggefässes (3) unterbrochen wird, insbesondere durch Schliessen eines zwischen dem Auffanggefäss (3) und einer Vakuum-Pumpe (14) angeordneten Absperrventils (13).

12. Verfahren nach einem der Ansprüche 10 oder 11, **dadurch gekennzeichnet, dass** der Schritt d) eines
Destillationszyklus im Wesentlichen gleichzeitig mit dem Schritt a) eines nachfolgenden Destillationszyklus erfolgt.

13. Verfahren nach einem der Ansprüche 10 bis 12, **dadurch gekennzeichnet, dass** mindestens einer der Schritte a) bis
e) mittels eines Kontrollers (22) gesteuert wird.

14. Verfahren nach Anspruch 13, **dadurch gekennzeichnet, dass** die Kontrolle in Abhängigkeit mindestens eines Prozessparameters erfolgt, insbesondere ausgewählt aus folgenden Parametern:
- Flüssigkeitsniveau im Verdampfergefäss (15) und/oder Auffanggefäss (3)
- Zeitdauer seit dem Start eines Destillationszyklus
- Ventilstellungen
- Volumina des Verdampfergefässes (15) und/oder des Auffanggefässes (3)
- Destillationsflüssigkeiten (17)
- Temperaturwerte und/oder Druckwerte.

15. Verfahren nach Anspruch 14, **dadurch gekennzeichnet, dass** mindestens ein Prozessparameter mittels geeigneter Sensoren am Verdampfer (1) abgegriffen und an den Kontroller (22) übermittelt wird.
